# EUROPÄISCHE PATENTSCHRIFT

(11) **EP 0 997 678 B1**
(45) Veröffentlichungstag und Bekanntmachung des Hinweises auf die Patenterteilung: **03.07.2002**
(21) Anmeldenummer: 99121458.6
(22) Anmeldetag: 28.10.1999
(51) Int. Cl.: F16L 21/06, F16L 55/17

(54) **Klemmmuffenverbindung**
Coupling sleeve provided with locking means for pipes connection
Bague de serrage pour la connection de tuyaux

(30) Priorität: 29.10.1998 DE 19849941
(43) Veröffentlichungstag der Anmeldung: 03.05.2000
(73) Patentinhaber: gabo Systemtechnik GmbH, 94559 Niederwinkling (DE)
(72) Erfinder: Bauer, Peter, 94357 Konzell (DE); Helf, Walter, 94315 Straubing (DE); Lederer, Roland, 93049 Regensburg (DE)

(56) Entgegenhaltungen:
- DE-A- 2 158 992
- DE-U- 7 833 835
- US-A- 3 851 671

## Beschreibung

Aus zwei Halbschalen bestehende Klemmmuffenverbindung für Vollrohre und solche, die aus zwei Halbrohren zusammengesetzt sind, wie Kabelkanalrohre, Reparaturrohre oder dergl., mit einer Dichtmatte zwischen abzudichtender Rohraußenwand und Klemmmuffeninnenwand die durch Versschlußkeile in ihrer Wirkstellung gehalten ist.

Derartige, aus zwei Halbschalen bestehende Rohrmuffen sind an sich bekannt. So zeigt das DE-GM 78 33 835.9 eine gattungsgemäße Rohrmuffe, bei der in den durch den Rohr-Außendurchmesser und den Muffenmittelteil-Innendurchmesser bestehenden Hohlraum sowie zwischen die Stoßstellen der beiden Halbschalen eine hochviskose Dichtmasse eingebracht ist.

Diese Rohrmuffen haben sich in der Praxis bewährt und werden in großen Stückzahlen, vor allem zum Abdichten von Kabelkanalrohren, eingesetzt. In der letzten Zeit hat sich die Technologie der Verlegung von Kabelkanälen insofern vollständig geändert, als jetzt Gleitöle zum Einziehen der Kabel verwendet werden, die die Dichtmasse chemisch angreifen, indem sie diese anlösen und so, oft sehr rasch, zu Undichtigkeiten führen. Weiterhin hat sich gezeigt, daß die Viskosität der verwendeten Dichtmassen bei extremen Temperaturen starken Schwankungen unterliegt und dabei entweder zu weich oder zu fest ist.

Aus der EP 0650007 B1 ist eine weitere, aus zwei Halbschalen bestehende Rohrmuffe bekannt geworden, mit der diese Nachteile behoben werden. Dabei ist eine längsgeteilte Dichtmatte zwischen abzudichtender Rohraußenwand und der Rohrmuffeninnenwand eingelegt und in einer Nut einer der beiden Halbschalen verrastet.

Diese bekannten Rohrmuffen sind jedoch noch verbesserungsbedürftig. Sie sind zwar dicht, aber nur bis zu einer Grenze von etwa 3 bar. Dies reicht für viele neu aufgetretene Anwendungsfälle nicht mehr aus. Ein weiteres Merkmal, das es zu verbessern gilt ist die Längskraftschlüssigkeit solcher Muffenverbindungen. Es hat sich nämlich gezeigt, daß bei den heute üblichen neuen Verfahren, mit denen Kabel, insbesondere Glasfaserkabel großer Länge, unter hohem Druck in die Kabelkanalrohre eingebracht werden Probleme auftreten. Dabei kann es vorkommen, daß sie aus der Muffe, beispielsweise über einem Reparaturstück, herausgezogen werden, da deren Längskraftschlüssigkeit dafür nicht ausreichend ist. Ist die Dichtwirkung ungenügend, kann ein Druckabfall beim Einbringen der Kabel die Durchführung des Verfahrens sogar vollständig verhindern, ganz abgesehen davon, daß im Betriebszustand in tieferen Schichten oder in Gewässern, Wasser in das Kabelkanalrohr eindringen und den bestimmungsgemäßen Gebrauch des Kabels verhindern kann.

Hier setzt die Erfindung ein. Der Erfindung, wie sie in den Ansprüchen beschrieben ist, liegt die Aufgabe zugrunde, eine Rohrmuffenverbindung zu schaffen, die eine verbesserte Dichtigkeit bis ca. 10bar und die für das Einbringen von Kabeln mit hohen Drücken erforderliche Längskraftschlüssigkeit aufweist.

Die mit der Erfindung erzielten Vorteile liegen insbesondere darin, daß es durch die erhöhte Dichtwirkung möglich ist, das Kabelkanalrohr mit hohem Druck zu beaufschlagen und damit moderne Einblas- bzw. Einspülverfahren für Kabel großer Länge zu ermöglichen bei gleichzeitig wirksamer hoher Längskraftschlüsigkeit im Bereich der Rohrmuffenverbindung, so daß ein herausreißen der Rohrenden aus der Muffe mit Sicherheit verhindert ist.

Die Erfindung ist nachstehend anhand eines in den Abbildungen dargestellten Ausführungsbeispieles näher erläutert.
Es zeigt:
- Fig.1: eine perspektivische Darstellung der Rohrklemmmuffe
- Fig. 2: einen Teilschnitt, der Rohrklemmmuffe,
- Fig. 3: einen Teilschnitt durch eine Muffenrohrverbindung,
- Fig. 4: eine perspektivische Darstellung einer Muffenhalbschale und
- Fig. 5: eine perspektivische Darstellung einer Verschlußklammer.

Die in den Abbildungen dargestellte Rohrklemmmuffe 1 besteht im wesentlichen aus den beiden Halbschalen 11 und 12, den darin eingelegten Dichtmattenhälften 2a und 2b und den vier Verschlußklammern 31,32,33 und 34 sowie den Klemmelementen 41,42,43,44.

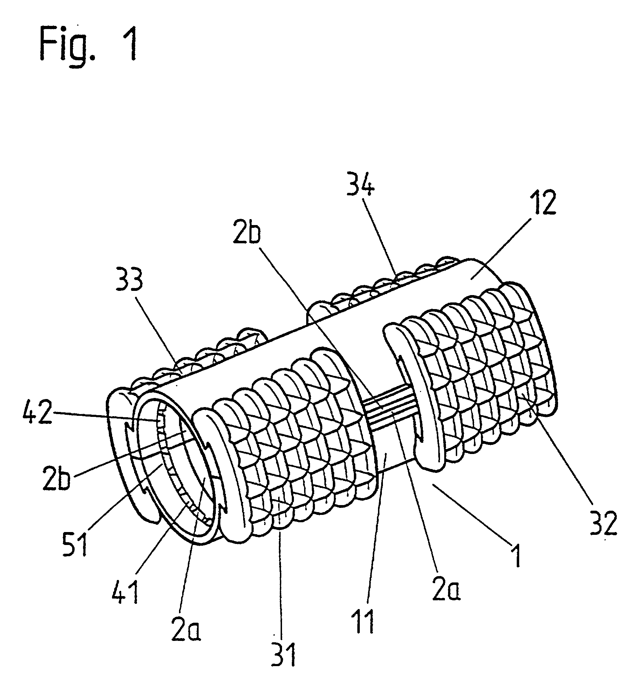

Wie aus Fig. 1 ersichtlich, sind die beiden Halbschalen 11 und 12 der Rohrklemmmuffe 1 mittels je zwei auf deren oberen und auf deren unteren Hälfte aufgeschobenen Verschlußklammern 31,32 bzw. 33,34 miteinander derart verspannt, daß die Dichtmatte 2 zwischen den beiden Halbschalen 11 und 12 verpreßt ist. Sind die beiden Verschlußklammern 31,32 bzw. 33,34 in ihre Wirkstellung verbracht worden, verbleibt zwischen beiden ein axialer Abstand von etwa 25% ihrer jeweiligen Länge L, um, falls erforderlich, Korrekturen des Anpreßdruckes vornehmen zu können. Die Klemmelemente 41,42,43,44 für die Erzielung der Längskraftschlüssigkeit der Klemmmuffenverbindung sind in den oben gegenüber dem Rand, bzw. der Trennebene 61-62 der Halbschalen 11,12 verschlossenen Nuten 51 bzw. 52 angeordnet.

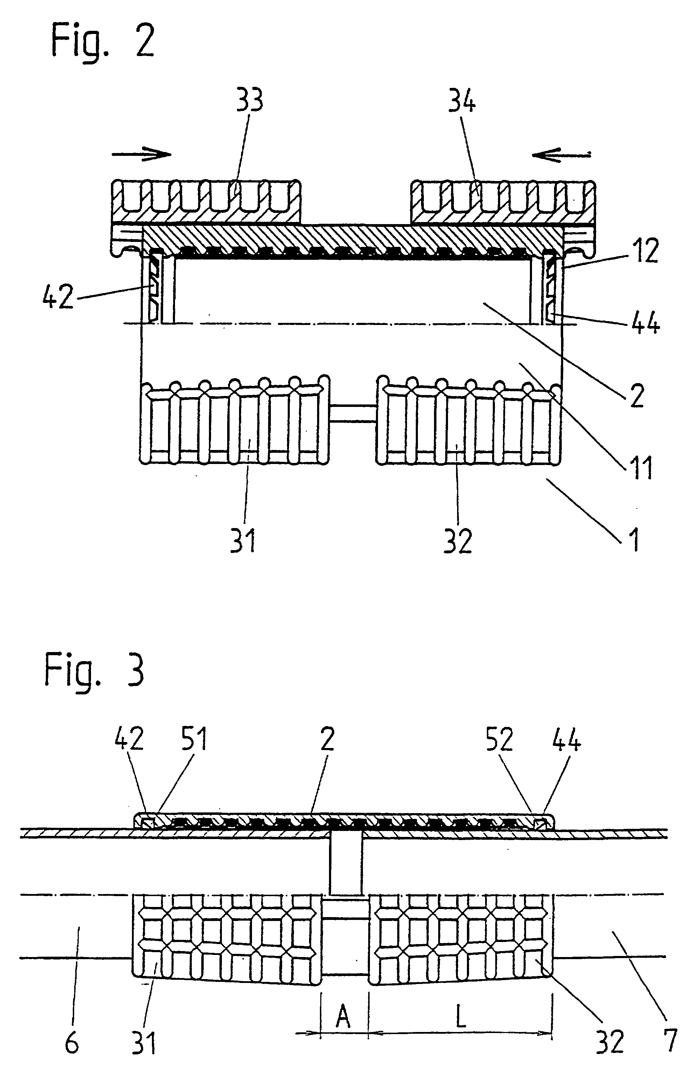

Die Fig. 2 zeigt die Rohrklemmmuffe 1 im Teilschnitt, wobei de beiden unteren Verschlußklammem 31 und 32 bereits in ihre Wirkstellung verbracht sind, während die beiden oberen Verschlußklammern 33 und 34 in Pfeilrichtung auf die Rohrmuffe 1 aufgeschoben werden.

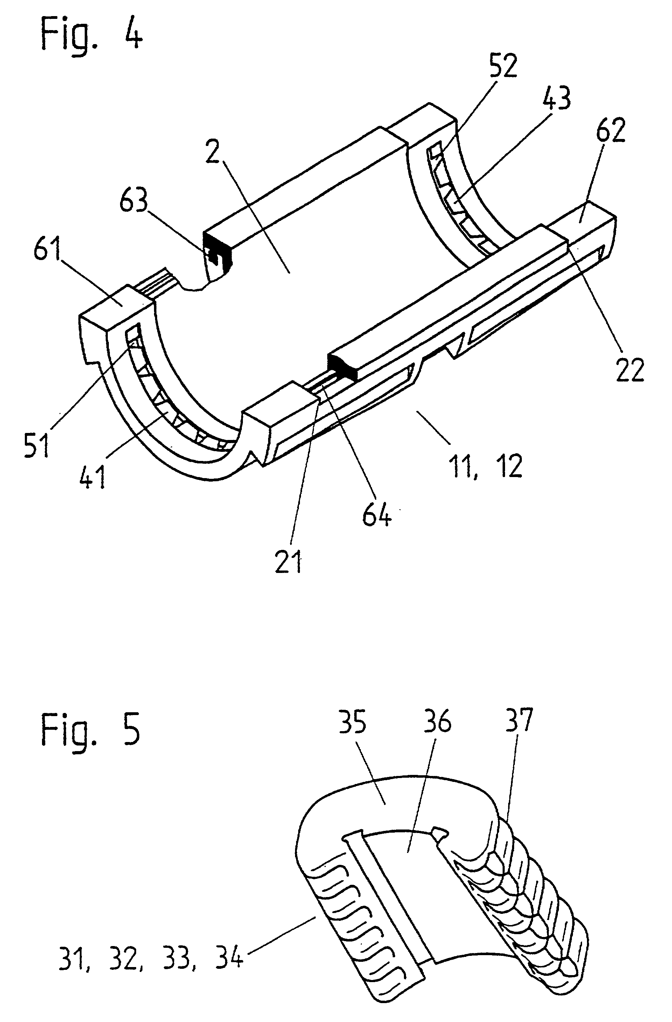

Aus dem Teilschnitt der Fig. 3 ist die druckdichte und längskraftschlüssige Rohrklemmverbindung ersichtlich, bei der die beiden Rohrenden 6 und 7 sich innerhalb des Muffenkörpers 1 gegenüberstehen und mittels der Rohrklemmmuffe sowohl dicht als auch längskraftschlüssig miteinander verbunden sind. Die Abdichtung erfolgt dabei durch die axial geteilten Dichtmatten 2a,2b, die, wie aus Fig. 4 ersichtlich, in einer in der Trennebene 61,62 der Halbschalen axial verlaufenden Nut 63 eingelegt und/oder in einem Bereich 21,22 vertieft gelagert ist. Mit A ist in Fig. 3 der definierte Abstand zwischen den Verschlußklammem 31 und 32, etwa 25% der Länge L derselben, in deren Endstellung bezeichnet. Die Verschlußklammem 31 und 32 sind vorzugsweise aus einem verstärkten Kunststoffmaterial hergestellt und sind außen mit Verstrebungen 37 versehen.

Die Fig. 5 zeigt die dem Muffenkörper 1 zugewandte Oberfläche des Brükkenbereiches 35 einer der Verschlußklammer 31,32,33,34. Diese Oberfläche ist mit einer Gleitfläche 36 ausgerüstet, um das Aufbringen der Verschlußklammern auf den Muffenkörper zu erleichtem.

### Bezugszeichenliste

- 1: Muffenkörper
- 2: Untere Halbschale
- 3: Obere Halbschale
- 4: Dichtmatte
- 21-22: Vertiefter Bereich
- 31-34: Verschlußklammem
- 35: Brückenbereich der Verschlußklammern
- 36: Gleitfläche
- 37: Äußere Verstrebung
- 41-44: Klemmelemente
- 51: Nut
- 52: Nut
- 61-62: Trennebene der Halbschalen
- 63: Axiale Nut
- A: Abstandsmaß
- L: Längenmaß

## Patentansprüche

1. Klemmuffenverbindung für Vollrohre oder solche Rohre, die aus zwei Halbrohren zusammengesetzt sind, wie Kabelkanalrohre, Reparaturrohre o. dgl., mit einer zwei Halbschalen (11,12) aufweisenden Klemmuffe, wobei die beiden Halbschalen (11,12) um zu verbindende Rohrenden gelegt und mittels die Halbschalen (11,12) durch Keilwirkung gegeneinander verspannbare Verschlußklammern (31,32,33,34) verbunden sind, und mit einer zwischen den Außenwänden der Rohrenden und der Innenwand der Klemmuffe angeordneten Dichtmatte (2a,2b), **dadurch gekennzeichnet, daß** an radial äußeren Längsseiten der Trennebenen (61,62) der Halbschalen je zwei Verschlußklammern (31,32) sowie (33,34) von den beiden axialen Enden der Klemmuffe ausgehend gegeneinander aufgebracht sind, daß in deren Endstellung jeweils ein definierter Abstand (A) zwischen ihnen verbleibt, daß die Halbschalen (11,12) entlang ihres Innenumfanges beidseitig der Dichtungsmatte (2a,2b), gegenüber den Trennebenen (61,62) der Halbschale verschlossene Nuten (51,52) aufweisen, in welchen Klemmelemente (41,42,43,44) angeordnet sind und daß die Klemmuffenverbindung derart ausgebildet ist, daß beim Aufbringen der Verschlußklammern (31,32,33,34) die Verspannung der Klemmelemente (41,42,43,44) vor der Verpressung der Dichtmatte (2a,2b) einsetzt.

2. Klemmuffenverbindung nach Anspruch 1, **dadurch gekennzeichnet, daß** in der Endstellung der Abstand (A) zwischen den Verschlußklammern (31-32 bzw. 33,34) etwa 25% der Länge (L) der Verschlußklammern beträgt.

3. Klemmuffenverbindung nach Anspruch 1 und 2, **dadurch gekennzeichnet, daß** die Dichtmatte (2a,2b) in den Trennebenen (61,62) in einem vertieften Bereich (21-22) vertieft gelagert ist.

4. Klemmuffenverbindung nach Anspruch 1 und einen der folgenden, **dadurch gekennzeichnet, daß** eine Brücke (35) der Verschlußklammem (31,32,33,34) schwalbenschwanzförmig mit einer äußeren Verstrebung (37) und einer inneren Gleitfläche (36) ausgebildet ist.

5. Klemmuffenverbindung nach Anspruch 1 und einen der folgenden, **dadurch gekennzeichnet, daß** die Verschlußklammem (31,32,33,34), die Dichtmatten (2a,2b) und die Halbschalen (11,112) aus Kunststoffen unterschiedlicher Härtegrade bestehen.

## Claims

1. Clamp sleeve connection for full pipes or such pipes as are composed of two half-pipes, such as cable duct pipes, repair pipes, or the like, with a clamping sleeve featuring two half-shells (11, 12), whereby the two half-shells (11, 12) are laid to connecting pipe ends and mutually-tensionable closure clamps (31, 32, 33, 34) are connected by means of the half-shells (11, 12) by way of a wedge effect, and with a sealing mat (2a, 2b) arranged between the outer walls of the pipe ends and the inner wall of the clamping sleeve, **characterised in that**, at radial outer longitudinal sides of the separation planes (61, 62) of the half-shells, there are located two mutually-opposed closure clamps (31, 32 and 33, 34) in each case, moving outwards from the two axial ends of the clamping sleeve, that in the end position in each case a defined distance interval (A) remains between them, that the half-shells (11, 12) feature closed slots along their inner circumference on both sides of the sealing mat (2a, 2b), opposite the separation planes (61, 62) of the half-shell, in which slots clamping elements (41, 42, 43, 44) are arranged, and that the clamping sleeve connection is designed in such a way that, when the closure clamps (31, 32, 33, 34) are applied, the tensioning of the clamping elements (41, 42, 43, 44) is applied before the compression of the sealing mat (2a, 2b).

2. Clamping sleeve connection according to Claim 1, **characterised in that**, in the end position, the distance interval (A) between the closure clamps (31-32 and 33-34 respectively) amounts to about 25% of the length (L) of the closure clamps.

3. Clamping sleeve connection according to Claim 1 and 2, **characterised in that** the sealing mat (2a, 2b) in the separation planes (61, 62) is laid embedded in a deepened area (21-22).

4. Clamping sleeve connection according to Claim 1 and one of the following Claims, **characterised in that** a bridge (35) of the closure clamps (31, 32, 33, 34) is formed in gooseneck fashion with an outer bracing element (37) and an inner sliding surface (36).

5. Clamping sleeve connection according to Claim 1 and one of the following Claims, **characterised in that** the closure clamps (31, 32, 33, 34), the sealing mats (2a, 2b), and the half-shells (11, 12) are made of plastics of differing degrees of hardness.

## Revendications

1. Raccord par manchon auto-bloquant pour tubes monobloc ou tubes constitués de deux moitiés, tels que les tubes pour conduites de câbles, les tubes de réparation ou autres, dotés d'un manchon auto-bloquant à deux semi-monocoques (11,12), celles-ci (11,12) entourant les extrémités de tube à raccorder et reliant par effet de clavette des étriers (31,32,33,34) pouvant se tordre mutuellement, et présentant une natte étanche (2a,2b) située entre les parois extérieures des extrémités du tube et la paroi intérieure du manchon auto-bloquant, **se caractérisant par le fait que**, sur les faces longitudinales extérieures radiales des plans de joint (61,62) des semi-monocoques, deux étriers (31, 32 comme 33, 34) partent de chaque côté des deux extrémités axiales du manchon auto-bloquant en direction de l'autre extrémité, qu'en position finale il reste une distance définie (A) entre ces étriers, que les semi-monocoques (11,12) présentent des rainures fermées (51,52) le long de leur périmètre intérieur, de chaque côté de la natte étanche (2a, 2b) face aux plans de joint (61,62) de la semi-monocoque, dans lesquelles des éléments auto-bloquants (41,42,43,44) sont installés et que le raccord par manchon auto-bloquant est constitué de sorte que, lors de l'installation des étriers (31,32,33,34), la déformation des éléments auto-bloquants (41,42,43,44) commence avant la compression de la natte étanche (2a,2b).

2. Raccord par manchon auto-bloquant conformément à la revendication 1, **se caractérisant par le fait qu'**en position finale, la distance (A) entre les étriers (31-32 ou 33, 34) correspond environ au quart de la longueur (L) de ces derniers.

3. Raccord par manchon auto-bloquant conformément aux revendications 1 et 2, **se caractérisant par le fait que** la natte étanche (2a, 2b) située dans les plans de joint (61, 62) est enfoncée dans une zone évidée (21-22).

4. Raccord par manchon auto-bloquant conformément à la revendication 1 et à une des revendications suivantes, **se caractérisant par le fait qu'**un pont (35) des étriers (31, 32, 33, 34) est en queue d'aronde avec une entretoise extérieure (37) et une surface de glissement (36).

5. Raccord par manchon auto-bloquant conformément à la revendication 1 et à une des revendications suivantes, **se caractérisant par le fait que** les étriers (31, 32, 33, 34), les nattes étanches (2a, 2b) et les semi-monocoques (11, 12) sont en plastiques de duretés différentes.
